(19) Europäisches Patentamt / European Patent Office / Office européen des brevets

(11) **EP 4 425 804 B1**

(12) **EUROPEAN PATENT SPECIFICATION**

(45) Date of publication and mention
of the grant of the patent:
**20.05.2026 Bulletin 2026/21**

(21) Application number: **22952538.1**

(22) Date of filing: **29.07.2022**

(51) International Patent Classification (IPC):
*H04L 47/50* (2022.01)    *H04J 3/06* (2006.01)

(52) Cooperative Patent Classification (CPC):
**H04J 3/0667; H04L 47/28; H04L 47/50;
H04W 56/0015**

(86) International application number:
**PCT/CN2022/109171**

(87) International publication number:
**WO 2024/021091 (01.02.2024 Gazette 2024/05)**

(54) **PERIOD SYNCHRONIZATION METHOD, SYSTEM, AND APPARATUS, AND ELECTRONIC DEVICE**

VERFAHREN, SYSTEM UND VORRICHTUNG ZUR PERIODENSYNCHRONISIERUNG UND ELEKTRONISCHE VORRICHTUNG

PROCÉDÉ, SYSTÈME, ET APPAREIL DE SYNCHRONISATION DE PÉRIODE, ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.09.2024 Bulletin 2024/36**

(73) Proprietor: **New H3C Technologies Co., Ltd.
Hangzhou, Zhejiang 310052 (CN)**

(72) Inventor: **GUO, Daorong
Beijing 100102 (CN)**

(74) Representative: **Grünecker Patent- und
Rechtsanwälte
PartG mbB
Leopoldstraße 4
80802 München (DE)**

(56) References cited:
WO-A1-2022/023555    CN-A- 111 698 787
CN-A- 111 865 830    CN-A- 113 556 763
CN-A- 113 747 512

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The invention relates to the field of network communication technologies, and in particular to cycle synchronization methods, systems, apparatuses and electronic devices.

**BACKGROUND**

In the current deterministic flow transmission applications, clock synchronization between transmission nodes at both ends requires hardware-level support. For example, taking the clock synchronization to be achieved between transmission nodes at both ends of the 5G system (5GS) as an example, any one of the transmission nodes at both ends of the 5GS, such as, a Network-side TSN (Time-Sensitive Networking) translator (NW-TT) or a Device-side TSN translator (DS-TT), requires hardware-level support in achieving clock synchronization. For most of the low-cost products, it is difficult for the hardware level to support clock synchronization.

CN111698787A discloses a scheduling rule determination method and device, and the method comprises an access network device receives port information of a virtual switching node from a session management network element, wherein the port information of the virtual switching node comprises ingress port information of the virtual switching node or egress port information of the virtual switching node; determining time information of the user terminal according to the output port information of the virtual switching node or the input port information of the virtual switching node; determining a scheduling rule of the access network equipment and/or time delay information between the user terminal and the access equipment according to the time information of the user terminal and the scheduling capability of the access network equipment; and performing transmission according to the scheduling rule of the access network equipment and/or the time delay information between the user terminal and the access equipment. By adoption of the embodiment of the invention, the scheduling rule of each user plane node can be determined, so each user plane node transmits the TSN stream according to the respective scheduling rule, thereby realizing deterministic transmission of a 5G system.

CN113556763A discloses a method for realizing data transmission of a time-sensitive network, related equipment and a medium. The method comprises the steps that in a protocol data unit session management process of a user terminal, session management function equipment reports port management parameters to a centralized network controller, the port management parameters comprise an identifier of the user terminal, a first port list provided by an equipment side time-sensitive network converter connected with the user terminal, and a second port list provided by a network time-sensitive network converter connected with user plane function equipment; and the session management function equipment receives port configuration parameters issued by the centralized network controller, wherein the port configuration parameters comprise port resources associated with the protocol data unit session. According to the invention, the problems of transmission conflicts, poor port configuration and the like can be effectively solved, and the smooth proceeding of the data transmission process of the time-sensitive network is ensured.

CN113747512A discloses a communication method, a device and a computer readable storage medium. The method comprises the following steps: receiving a first data packet; and sending the first data packet and first indication information to an access network device, the first indication information being used for indicating that the first data packet is an uplink data packet or a downlink data packet, and the first indication information being used by the access network device to determine an access network AN packet delay budget PDB of a first quality of service QoS flow corresponding to the first data packet. According to the embodiment of the invention, the stay time of the data packet in the 5GS can be ensured to meet the requirement.

**SUMMARY**

Embodiments of the invention provide cycle synchronization methods, systems, apparatuses, and electronic devices, so as to achieve synchronization of scheduling cycles for packet queue scheduling in the transmission nodes at both ends while maintaining mutual independence in clock domains of the transmission nodes at both ends.

The invention is set out in the appended set of claims 1-15. The embodiments which are described hereinafter but are not encompassed by the wording of the claims are only considered as useful examples for understanding the invention. An embodiment of the invention provides a cycle synchronization method, which is applied to a first transmission node. The first transmission node is coupled to a second transmission node; a first clock domain of the first transmission node is different from a second clock domain of the second transmission node; a network system between the first transmission node and the second transmission node is coupled to the first transmission node through a first intermediate device, and is coupled to the second transmission node through a second intermediate device; and the first intermediate device and the second intermediate device have a same third clock domain in the network system. The method includes:

in response to detecting a packet transmission event, sending a first cycle synchronization information packet to the second transmission node at a time point t1[1] under the first clock domain, such that the second transmission node, upon determining that a width of a scheduling cycle for packet queue scheduling in the second transmission node needs to be adjusted based on the first cycle synchronization information packet, adjusts the width of the scheduling cycle, so as to enable an error between the adjusted width of the scheduling cycle and a width of a scheduling cycle for packet queue scheduling in the first transmission node to be within a preset synchronization range;

the first cycle synchronization information packet includes at least: a current cycle C1_1 of the first transmission node and first time information; where the current cycle is a scheduling cycle in which the first transmission node is currently located for packet queue scheduling, or the current cycle is a system cycle of the first transmission node; the first time information is a time point under the third clock domain, which is determined based on time information t3[1] under the third clock domain corresponding to the time point t1[1] in the first clock domain.

An embodiment of the invention further provides a cycle synchronization method, which is applied to a second transmission node. The second transmission node is coupled to a first transmission node; a first clock domain of the first transmission node is different from a second clock domain of the second transmission node; a network system between the first transmission node and the second transmission node is coupled to the first transmission node through a first intermediate device, and is coupled to the second transmission node through a second intermediate device; and the first intermediate device and the second intermediate device have a same third clock domain in the network system. The method includes:

receiving a first cycle synchronization information packet from the first transmission node at a time point t2[1] under the second clock domain and determining a current cycle C2_1 of the second transmission node;

based on a cycle C1_1 and first time information included in the first cycle synchronization information packet, determining a cycle C1_2 in which the first transmission node is currently located at the time point t2[1];

based on the C2_1 and C1_2, and C2_0 and C1_0 both determined by the second transmission node upon receiving a second cycle synchronization information packet previously, determining whether to adjust a width of a scheduling cycle for packet queue scheduling in the second transmission node; if yes, adjusting the width of the scheduling cycle for packet queue scheduling in the second transmission node to enable an error between the adjusted width of the scheduling cycle and a width of a scheduling cycle for packet queue scheduling in the first transmission node to be within a preset synchronization range, where C2_0 represents a current cycle in which the second transmission node receives the second cycle synchronization information packet, and C1_0 represents a cycle in which the first transmission node is located when the second transmission node receives the second cycle synchronization information packet.

An embodiment of the invention provides a cycle synchronization system, including a first transmission node and a second transmission node, where a first clock domain of the first transmission node is different from a second clock domain of the second transmission node; a network system between the first transmission node and the second transmission node is coupled to the first transmission node through a first intermediate device, and is coupled to the second transmission node through a second intermediate device; the first intermediate device and the second intermediate device have a same third clock domain in the network system;

the first transmission node performs operations in the above first method;
the second transmission node performs operations in the above second method.

An embodiment of the invention provides a cycle synchronization apparatus, which is applied to a first transmission node. The first transmission node is coupled to a second transmission node; a first clock domain of the first transmission node is different from a second clock domain of the second transmission node; a network system between the first transmission node and the second transmission node is coupled to the first transmission node through a first intermediate device, and is coupled to the second transmission node through a second intermediate device; the first intermediate device and the second intermediate device have a same third clock domain in the network system. The apparatus includes:

a detecting unit, configured to detect a packet transmission event;
a sending unit, configured to, when the detecting unit detects the packet transmission event, send a first cycle synchronization information packet to the second transmission node at a time point t1[1] under the first clock domain, such that the second transmission node, upon determining that a width of a scheduling cycle for packet queue scheduling in the second transmission node needs to be adjusted based on the first cycle synchronization information packet, adjust the width of the scheduling cycle, so as to enable an error between the adjusted width of the scheduling cycle and a width of a scheduling cycle for packet queue scheduling in the first transmission node to be within a preset synchronization range;

the first cycle synchronization information packet includes at least: a current cycle C1_1 of the first transmission node and first time information; wherein the current cycle is a scheduling cycle in which the first transmission node is currently located for packet queue scheduling, or the current cycle is a system cycle of the first transmission node; the first time information is a time point under the third clock domain, which is determined based on time information t3[1] under the third clock domain corresponding to the time point t1[1] in the first clock domain.

An embodiment of the invention provides a cycle synchronization apparatus, which is applied to a second transmission node. The second transmission node is coupled to a first transmission node; a first clock domain of the first transmission node is different from a second clock domain of the second transmission node; a network system between the first transmission node and the second transmission node is coupled to the first transmission node through a first intermediate device, and is coupled to the second transmission node through a second intermediate device; and the first intermediate device and the second intermediate device have a same third clock domain in the network system. The apparatus includes:

a receiving unit, configured to receive a first cycle synchronization information packet from the first transmission node at a time point t2[1] under the second clock domain and determine a current cycle C2_1 of the second transmission node;

a determining unit, configured to, based on a cycle C1_1 and first time information included in the first cycle synchronization information packet, determine a cycle C1_2 in which the first transmission node is currently located at the time point t2[1];

an adjusting unit, configured to, based on the C2_1 and C1_2, and C2_0 and C1_0 both determined by the second transmission node upon receiving a second cycle synchronization information packet previously, determine whether to adjust a width of a scheduling cycle for packet queue scheduling in the second transmission node; if yes, adjust the width of the scheduling cycle for packet queue scheduling in the second transmission node to enable the an error between the adjusted width of the scheduling cycle and a width of a scheduling cycle for packet queue scheduling in the first transmission node to be within a preset synchronization range, where C2_0 represents a current cycle in which the second transmission node receives the second cycle synchronization information packet, and C1_0 represents a cycle in which the first transmission node is located when the second transmission node receives the second cycle synchronization information packet.

An embodiment of the invention provides an electronic device, which includes a processor and a machine-readable storage medium; where,

the machine-readable storage medium stores machine executable instructions executable by the processor;
the processor is configured to execute the machine executable instructions to perform any one of the above methods.

An embodiment of the invention provides a machine-readable storage medium, storing machine executable instructions executable by a processor; where,
the machine executable instructions are executed by the processor to perform any one of the above methods.

It can be seen from the above technical solutions, that in the embodiments of the invention, without depending on strict clock synchronization of the transmission nodes at both ends, it is simply required to adjust a width of a scheduling cycle for packet queue scheduling in the transmission node at one end to enable the error between the adjusted width of the scheduling cycle and a width of a scheduling cycle for packet queue scheduling in the other transmission node to be a preset synchronization range, so as to achieve weak synchronization of the transmission nodes at both ends in deterministic flow transmission, ensuring normal forwarding of the deterministic flow.

## BRIEF DESCRIPTION OF DRAWINGS

The accompanying drawings, which are incorporated in and constitute a part of the present description, illustrate embodiments consistent with the invention and serve to explain the principles of the invention together with the description.

FIG. 1 is a flowchart illustrating a method according to embodiments of the invention.
FIG. 2 is a flowchart illustrating another method according to embodiments of the invention.
FIG. 3 is a schematic diagram illustrating a network according to embodiments of the invention.
FIG. 4 is a schematic diagram illustrating a clock domain according to embodiments of the invention.
FIG. 5 is a schematic diagram illustrating an implementation time sequence according to embodiments of the invention.

FIG. 6 is a structural diagram illustrating an apparatus according to embodiments of the invention.

FIG. 7 is a structural diagram illustrating another apparatus according to embodiments of the invention.

FIG. 8 is a structural diagram illustrating an electronic device according to embodiments of the invention.

**DETAILED DESCRIPTION**

Exemplary embodiments will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the invention. Rather, they are merely examples of apparatuses and methods consistent with some aspects of the invention as detailed in the appended claims.

The terms used in the invention are used only for describing specific embodiments rather than limiting the invention. The terms "a", "the" and "said" in singular form in the invention are also intended to include plural forms, unless otherwise clearly indicated in the context.

The methods provided by the embodiments of the invention will be described below.

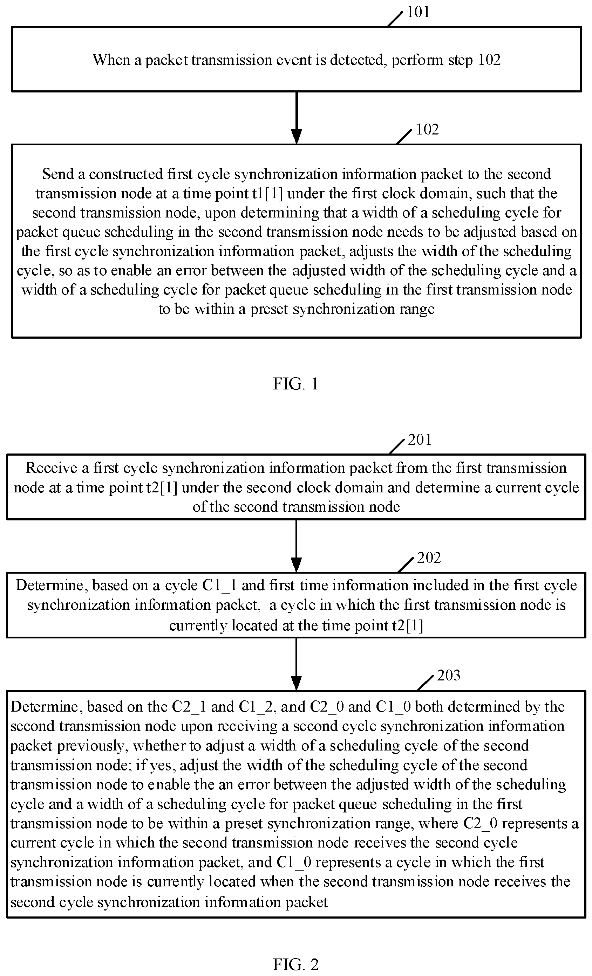

FIG. 1 is a flowchart illustrating a method according to embodiments of the invention. The method is applied to a first transmission node which is coupled to a second transmission node. Herein, the first transmission node and the second transmission node are named only for ease of descriptions rather than for the purpose of limitation. With the first transmission node and the second transmission node as transmission node at both ends of 5GS, in this embodiment, one of the first transmission node and the second transmission node is Device-Side TSN Translator (DS-TT) and the other is a Network-Side TSN Translator (NW-TT), or the first transmission node and the second transmission node are two different DS-TTs or the like, which is not limited herein.

In this embodiment, a first clock domain of the first transmission node is different from a second clock domain of the second transmission node.

Furthermore, in this embodiment, there is a network system between the first transmission node and the second transmission node. For example, the network system can be a 5GS or another mobile system or the like, which is not limited herein. In this embodiment, the above network system is coupled to the first transmission node through a first intermediate device, and is coupled to the second transmission node through a second intermediate device, and the first intermediate device and the second intermediate device have a same third clock domain in the network system.

With the above network system as 5GS, it is found through researches on 5GS that a User Plane Function network element (UPF) and a User Equipment (UE) have a unified clock domain, i.e., 5GS clock domain (5GS Timer) in the 5GS, and the 5GS is coupled to the two transmission nodes respectively through the UPF and the UE serving as intermediate devices. For example, when the first transmission node is an NW-TT and the second transmission node is a DS-TT, the 5GS is coupled to the NW-TT serving as the first transmission node through the UPF, and is coupled to the DS-TT serving as the second transmission node through the UE. At this time, the first intermediate device is the UPF, the second intermediate device is the UE, and the third clock domain is the 5GS clock domain.

Based on this, in this embodiment, the first transmission node may take time information of the third clock domain, for example, the 5GS clock domain, on the first intermediate device coupled hereto as reference, and the second transmission node take may take time information of the third clock domain, for example, the 5GS clock domain, on the second intermediate device coupled hereto as reference, and cycle synchronization of the first transmission node and the seconds transmission node is achieved macroscopically by interaction. Illustrative descriptions will be made below with the blocks in FIG. 1.

As shown in FIG. 1, the flow can include the following blocks.

At block 101, when a packet transmission event is detected, block 102 is performed.

In this embodiment, the packet transmission event can be implemented in many forms, for example, by arrival of packet transmission time (for example, arrival of a transmission cycle, or arrival of a packet transmission timing or the like) or external trigger or the like, which is not limited in this embodiment.

At block 102, a constructed first cycle synchronization information packet is sent to the second transmission node at a time point t1[1] under the first clock domain, such that the second transmission node, upon determining that a width of a scheduling cycle for packet queue scheduling in the second transmission node needs to be adjusted based on the first cycle synchronization information packet, adjusts the width of the scheduling cycle, so as to enable an error between the adjusted width of the scheduling cycle and a width of a scheduling cycle for packet queue scheduling in the first transmission node to be within a preset synchronization range.

In this embodiment, the first cycle synchronization information packet includes at least: a current cycle (denoted as C1_1) of the first transmission node and first time information.

As an embodiment, the current cycle is a scheduling cycle in which the first transmission node is currently located for packet queue scheduling, for example, an i-th scheduling cycle. The packet queue herein is used to store packets for a deterministic flow.

As another embodiment, the current cycle is a system cycle in the first transmission node. In this embodiment, the system cycle refers to a total number of scheduling cycles experienced by the first transmission node, where the system cycle will be increased by a set value, for example, 1, for every one scheduling cycle experienced.

In this embodiment, the first time information is a time point under the third clock domain, which is determined based on time information (denoted as t3[1]) which is under the third clock domain and corresponds to the time point t1[1] in the first clock domain. t3[1] represents a time point under the third clock domain. Taking the third clock domain as 5GS clock domain in the 5GS as an example, the first time information can be a time point in the 5GS clock domain in the 5GS, which can be determined based on a 5GS time point in the 5GS corresponding to the time point t1[1].

As an embodiment, in this embodiment, considering a transmission delay (denoted as $a$) of time information between the first transmission node and the first intermediate device, the time information t3[1] under the third clock domain corresponding to the time point t1[1] in the first clock domain can be expressed in the following formula (1):

$$t3[1] = t3\_1[0] + a + \Delta t1 \qquad (1)$$

In the formula (1), t3_1[0] represents time information under the third clock domain obtained by the first transmission node at a time point t1[0] under the first clock domain, in other words, the time information is sent at t3_1[0] under the third clock domain and obtained by the first transmission node at t1[0]. As an embodiment, t3_1[0] represents a time point under the third clock domain. Taking the third clock domain as 5GS clock domain in the 5GS as an example, t3_1[0] can represent a time point under the 5GS clock domain in the 5GS. t3_1[0] is less than t3[1].

In the formula (1), $\Delta t1$ represents a time difference between the time point t1[1] and the time point t1[0].

Based on the above t3[1], as an embodiment, the first time information can be t3[1].

As another embodiment, in consideration of accuracy, the first time information can be a difference between t3[1] and $t1_{CyclePast}$. Herein, $t1_{CyclePast}$ represents a difference between the time point t1[1] and a start moment of the current cycle.

Here, the flow shown in FIG. 1 is completed.

It can be seen from the flow shown in FIG. 1 that, in this embodiment, under the network system coupled to the first transmission node and the second transmission node, with the time information under the third clock domain, for example, the 5GS time information as reference, the first transmission node sends the first cycle synchronization information packet including at least the above cycle identifier C1_1 (for identifying the current cycle of the first transmission node) and the first time information (a time point under the third clock domain), such that the second transmission node, upon determining that the width of the scheduling cycle for packet queue scheduling in the second transmission node needs to be adjusted based on the first cycle synchronization information packet, adjusts the width of the scheduling cycle for packet queue scheduling in the second transmission node, so as to enable an error between the adjusted width of the scheduling cycle of the second transmission node and the width of the scheduling cycle for packet queue scheduling in the first transmission node to be within a preset synchronization range. In this way, synchronization of the scheduling cycles for packet queue scheduling in the first transmission node and the second transmission node is macroscopically achieved, ensuring the deterministic network application scenarios with higher jitter accuracy requirement.

Furthermore, in the scheduling cycle synchronization method of the first transmission node and the second transmission node according to the present embodiment, no longer depending on strict clock synchronization of the transmission nodes at both ends, it is simply required to adjust a width of a scheduling cycle for packet queue scheduling in the transmission node at one end, to enable the error between the adjusted width of the scheduling cycle and a width of a scheduling cycle for packet queue scheduling in the other transmission node to be within a preset synchronization range, so as to achieve weak synchronization of the transmission nodes at both ends in deterministic flow transmission, ensuring normal forwarding of the deterministic flow.

The method provided by the embodiments of the invention will be described below from the aspect of the second transmission node.

FIG. 2 is a flowchart illustrating another method according to embodiments of the invention. The method is applied to the above second transmission node.

As shown in FIG. 2, the flow can include the following blocks.

At block 201, a first cycle synchronization information packet is received from the first transmission node at a time point t2[1] under the second clock domain and a current cycle of the second transmission node is determined.

In this embodiment, the current cycle of the second transmission node is denoted as C2_1.

As an embodiment, the current cycle of the second transmission node is a scheduling cycle (for packet queue scheduling) in which the second transmission node is currently located. For example, if the second transmission node is just in the M-th scheduling cycle at the time point t2[1], the current cycle C2_1 of the second transmission node at this time can be M.

As another embodiment, the current cycle of the second transmission node also be a system cycle in the second transmission node. For example, if the second transmission node is just in the M-th scheduling cycle at the time point t2[1], the system cycle recorded in the second transmission node at this time is 2M, and the above C2_1 can be 2M.

At block 202, based on a cycle C1_1 and first time information included in the first cycle synchronization information packet, a cycle in which the first transmission node is currently located at the time point t2[1] is determined.

In this embodiment, the cycle in which the first transmission node is currently located at the time point t2[1] is denoted as C1_2.

As an embodiment, for the convenience of determining C1_2, second time information can be introduced. The second time information is a time point under the third clock domain, which is determined based on time information under the third clock domain corresponding to the time point t2[1] in the second clock domain. Since the first time information and the second time information are under a same third clock domain, for example, 5GS clock domain, the cycle of the first transmission node corresponding to the time point t2[1] can be easily determined based on a time difference between the first time information and the second time information.

As an embodiment, determining the cycle in which the first transmission node is currently located at the time point t2[1] in the block 202 can be performed through blocks 1a to a3.

At block a1, a time difference between the first time information and the second time information is calculated.

The second time information is determined in a similar way to that of determining the above first time information, that is, determined, based on the time information which is under the third clock domain and corresponds to the time point t2[1]. Herein, the time information under the third clock domain corresponding to the time point t2[1] is denoted as t3[2].

For example, the first time information is time information t3[1] under the third clock domain corresponding to the time point t1[1] in the first clock domain, and correspondingly, the second time information is time information t3[2] under the third clock domain corresponding to the time point t2[1] in the second clock domain.

For another example, the first time information is a difference between t3[1] and the above $t1_{CyclePast}$, and correspondingly, the second time information is a difference between the t3[2] and $t2_{CyclePast}$, where $t2_{CyclePast}$ is a difference between the time point t2[1] and a start moment of the scheduling cycle (for example, the above M-th scheduling cycle) corresponding to C1_2.

As an embodiment, t3[2] is determined in a similar way to the above t3[1]. For example, t3 [2] can be expressed in the following formula (2):

$$t3[2] = t3\_2[0] + b + \Delta t2 \qquad (2)$$

In the formula (2), t3_2[0] represents time information under the third clock domain obtained by the second transmission node at a time point t2[0] under the second clock domain, and in other words, the time information is sent at t3_2[0] under the third clock domain and obtained by the second transmission node at t2[0]. As an embodiment, in the formula (2), t3_2[0] represents a time point under the third clock domain. Taking the third clock domain as 5GS clock domain in the 5GS as an example, t3_2[0] can be a time point under the 5GS clock domain in the 5GS. t3_2[0] is less than t3 [2].

In the formula (2), *b* represents a transmission delay of time information between the second transmission node and the second intermediate device, and $\Delta t2$ represents a time difference between the time point t2[0] and the time point t2 [1].

As mentioned above, the second time information is determined in a similar way to that of determining the first time information. Both of them are under the third clock domain, e.g., 5GS clock domain, and the time difference can be calculated directly based on the first time information and the second time information.

At block a2, based on the time difference and a time length of the scheduling cycle of the first transmission node, a cycle number of the scheduling cycles of the first transmission node corresponding to the time difference is determined.

In this embodiment, a quotient of the above time difference and the time length of the scheduling cycle of the first transmission node can be calculated and then based on the quotient, the above cycle number can be determined. For example, a positive integer closest to the quotient is determined as the above cycle number.

In this embodiment, due to synchronization, the above time length is not a fixed value but has little change and thus the accumulated error has little impact on the calculation. Therefore, it is equivalent to a constant value.

At block a3, based on the above cycle number and the C1_1, the cycle (denoted as C1_2) in which the first transmission node is currently located at the time point t2[1] is determined.

As an embodiment, the above C1_2 can represent a scheduling cycle in which the first transmission node is currently located for packet queue scheduling at the above time point t2[1]. Thus, if the above C1_1 also represents the scheduling cycle of the first transmission node, in this block a3, C1_2 represents a sum of the above C1_1 and the above cycle number. For example, if the above C1_1 is L (indicating the L-th scheduling cycle of the first transmission node), and the above cycle number is 10, the above C1_2 is L+10, which indicates the (L+10)-th scheduling cycle of the first transmission node.

The specific implementation of the block 202 is exemplified by the blocks a1 to a3 but not limited to the blocks.

At block 203, based on the C2_1 and C1_2, and C2_0 and C1_0 both determined by the second transmission node upon receiving a second cycle synchronization information packet previously, whether to adjust a width of a scheduling cycle of the second transmission node is determined; if yes, the width of the scheduling cycle of the second transmission node is adjusted to enable the an error between the adjusted width of the scheduling cycle and a width of a scheduling cycle for packet queue scheduling in the first transmission node to be within a preset synchronization range, where C2_0 represents a current cycle in which the second transmission node receives the second cycle synchronization information packet, and C1_0 represents a cycle in which the first transmission node is currently located when the second transmission node receives the second cycle synchronization information packet.

In this embodiment, if C2_1 represents a scheduling cycle in which the second transmission node is currently located when receiving the first cycle synchronization information packet, and correspondingly, C2_0 represents a scheduling cycle in which the second transmission node is currently located when receiving the second cycle synchronization information packet. Similarly, if C2_1 represents a system cycle in which the second transmission node is currently located when receiving the first cycle synchronization information packet, and correspondingly, C2_0 represents a system cycle in which the second transmission node is currently located when receiving the second cycle synchronization information packet.

In this embodiment, if the above C1_2 represents a scheduling cycle in which the first transmission node is currently located for packet queue scheduling at the time point t2[1], and correspondingly, the C1_0 represents a scheduling cycle in which the first transmission node is currently located when the second transmission node receives the second cycle synchronization information packet. Similarly, if the above C1_2 represents a system cycle in which the first transmission node is currently located at the time point t2[1], and correspondingly, the above C1_0 represents a system cycle in which the first transmission node is currently located when the second transmission node receives the second cycle synchronization information packet.

As an embodiment, determining whether to adjust the width of the scheduling cycle of the second transmission node based on C2_1 and C1_2 can be achieved in many ways, for example, by the following blocks b1 to b3.

At block b1, a first increment between C2_1 and C2_0 is calculated.

As an embodiment, the first increment can be a difference between C2_1 and C2_0. Certainly, if there is no reception record of the second cycle synchronization information packet at current, the current flow can be directly ended.

At block b2, a second increment between C1_2 and C1_0 is calculated.

As an embodiment, the second increment can be a difference between C1_2 and C1_0.

At block b3, whether a difference between the first increment and the second increment is within a preset value range is determined. If the difference between the first increment and the second increment is not within the preset value range, it is determined to adjust the width of the scheduling cycle of the second transmission node; and if the difference between the first increment and the second increment is within the preset value range, it is determined not to adjust the width of the scheduling cycle of the second transmission node.

In this embodiment, the preset value range can be set based on actual requirements, which is not limited herein.

Furthermore, in this embodiment, adjusting the width of the scheduling cycle of the second transmission node can also be adjusting the time length of the scheduling cycle of the second transmission node, for example, increasing the time length of the scheduling cycle of the second transmission node or reducing the time length of the scheduling cycle of the second transmission node or the like. Whether to increase or reduce mainly depends on the difference between the first increment and the second increment, which is not limited herein. However, no matter what adjustment is made, the final object is to ensure synchronization of the scheduling cycles of the first transmission node and the second transmission node at a macro level.

It is to be noted that in this embodiment, in order to ensure accuracy, when the time length of the scheduling cycle of the second transmission node is adjusted, an adjustment step length can be defined such that synchronization of the scheduling cycles of the first transmission node and the second transmission node is finally achieved macroscopically in a gradual adjustment manner.

It is further to be noted that in this embodiment, when it is determined to adjust the scheduling cycle of the second transmission node, a previous record (for example, the above C2_0 and C1_0 and the like) of receiving the second cycle synchronization information packet can be directly deleted.

Here, the flow shown in FIG. 2 is completed.

It can be seen from the flow shown in FIG. 2 that, in this embodiment, the transmission nodes at both ends take the time information under the third clock domain, for example, the 5GS clock domain as reference, the first transmission node sends the first cycle synchronization information packet including at least the above cycle identifier C1_1 (for identifying the current deterministic flow scheduling cycle of the first transmission node) and the first time information, such that the second transmission node determines whether to adjust the scheduling cycle of the second transmission node based on the first cycle synchronization information packet, and when determining to adjust the scheduling cycle of the second transmission node, adjusts the scheduling cycle of the second transmission node, so as to enable an error between the adjusted scheduling cycle and the scheduling cycle of the first transmission node to be within a preset range. In this way, synchronization for the scheduling cycles of the first transmission node and the second transmission node is macroscopically achieved, ensuring the deterministic network application scenarios with higher jitter accuracy requirement.

Furthermore, based on the implementation of synchronization of the scheduling cycles of the first transmission node and the second transmission node, it can be seen that in this embodiment, without depending on strict clock synchronization of the transmission nodes at both ends, it is simply required to adjust a width of a scheduling cycle for packet queue scheduling in the transmission node at one end to enable the error between the adjusted width of the scheduling cycle and a width of a scheduling cycle for packet queue scheduling in the other transmission node to be within a preset synchronization range, so as to achieve weak synchronization of the transmission nodes at both ends in deterministic flow transmission, ensuring normal forwarding of the deterministic flow and ensuring that the clock domains of the transmission nodes at both ends are maintained independent of each other.

With the transmission nodes at both ends of the 5GS, the above method provided by the embodiments of the invention is exemplified below.

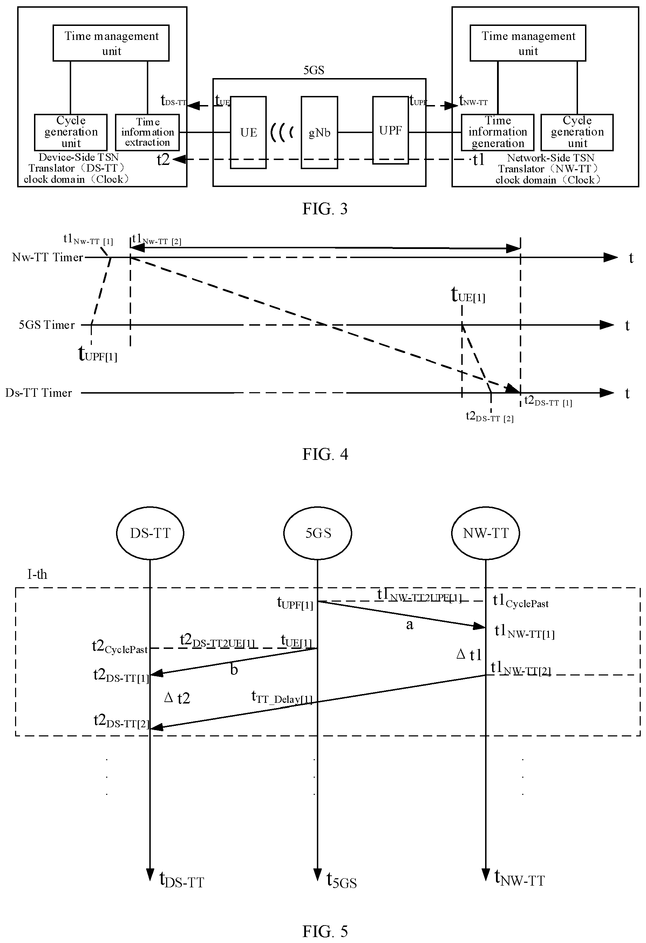

Applied to the network shown in FIG. 3, the NW-TT is coupled to the UPF through a channel between the UPF in the 5GS and the NW-TT. The channel herein is, for example, an Ethernet connection or an internal connection, which depends on whether the NW-TT and the UPF are integrated in one device or implemented separately, which is not limited herein.

In the network shown in FIG. 3, the DS-TT is coupled to the UE in the 5GS through 1PPS (One Pulse Per Second) and TOD (Time of Day) time information channel. FIG. 4 illustrates a clock domain (timer) relationship of NW-TT, 5GS and DS-TT. The 5GS has a unified clock domain (denoted as 5GS clock domain), and the times of the UPF and UE are synchronized in the 5GS clock domain.

If the first transmission node is the NW-TT and the second transmission node is the DS-TT, then, as shown in the time sequence in FIG. 5, the NW-TT firstly obtains current time information $t_{UPF[1]}$ of the UPF under the 5GS clock domain (e.g., the above t3_1[0]) through a channel (e.g., through an Ethernet connection or an internal connection) between the UPF in the 5GS and the NW-TT, with the transmission delay of obtaining the time information $t_{UPF[1]}$ being $a$. At this time, the timing on the NW-TT is $t1_{NW-TT[1]}$ (i.e., the above t1[0]). A mapping relationship between $t1_{NW-TT[1]}$ and $t_{UPF[1]}$ is $t1_{NW-TT[1]} = t_{UPF[1]} + a$. In this embodiment, the transmission delay $a$ is fixed and small, and can be regarded as a constant value.

The NW-TT sends the first cycle synchronization information packet to the DS-TT at $t1_{NW-TT[2]}$ (i.e., the above t1[1]). The first cycle synchronization information packet includes C1_1 and $t1_{NW-TT2UPF[1]}$ (i.e., the first time information mentioned above).

In this embodiment, C1_1 represents a cycle in which the NW-TT is currently located at $t1_{NW-TT[2]}$. For example, C1_1 is a second scheduling cycle in which the NW-TT is currently located for packet queue scheduling at $t1_{NW-TT[2]}$, where C1_1 is 2; for another example, C1_1 represents a 20th system cycle in which the NW-TT is currently located at $t1_{NW-TT[2]}$, where C1_1 is 20.

As an embodiment, $t1_{NW-TT2UPF[1]}$ can be expressed in the following formula (3):

$$t1_{\text{NW-TT2UPF}[1]} = t_{\text{UPF}[1]} + a + \Delta t1 - t1_{\text{CyclePast}} \qquad (3)$$

In the formula (3), $t1_{CyclePast}$ represents a difference between the time point $t1_{NW-TT[2]}$ and a start moment of the cycle represented by the C1_1.

In the formula (3), $\Delta t1$ represents a time difference between the time point $t1_{NW-TT[2]}$ and the time point $t1_{NW-TT[1]}$, where the time difference herein can include a delay from the time point $t1_{NW-TT[1]}$ to the time point $t1_{NW-TT[2]}$ (also including constructing the first cycle synchronization information packet and internally processing the first cycle synchronization information packet and the like). In a specific implementation, $\Delta t1$ is small, and in such a small time, the accumulated clock error resulting from the timing by the NW-TT and 5GS respectively can be neglected. Therefore, $\Delta t1$ is a timing in the clock domain of the NW-TT and can also be approximated as the timing of the 5GS clock domain.

The DS-TT receives the first cycle synchronization information packet from the NW-TT at $t2_{DS-TT[1]}$ (i.e., the above t2[1]). At this time, the cycle in which the DS-TT is currently located at $t2_{DS-TT[1]}$ represnets C2_1. In an example, C2_1 can represent a scheduling cycle in which the DS-TT is currently located for packet queue scheduling at $t2_{DS-TT[1]}$. For example, if the DS-TT is currently in the second scheduling cycle at $t2_{DS-TT[1]}$, the C2_1 can be 2. In another example, the C2_1 can be a system cycle in which the DS-TT is currently located at $t2_{DS-TT[1]}$. For example, if the DS-TT is currently in the 20th system cycle at $t2_{DS-TT[1]}$, the C2_1 can be 20.

In this embodiment, if the DS-TT is prior to the time point $t2_{DS-TT[1]}$, for example, at the time point $t2_{DS-TT[2]}$ (i.e., the above t3 _2[0]), the time information $t_{UE[1]}$ of the UE can be accurately obtained through the 1PPS and TOD time information channel between the DS-TT and the UE. At this time, the mapping relationship between the time point $t2_{DS-TT[2]}$ and the $t_{UE[1]}$ under the 5GS clock domain is $t2_{DS-TT[2]} = t_{UE[1]} + b$, where $b$ represents the transmission delay of obtaining the $t_{UE[1]}$ by the DS-TT (i.e., the transmission delay between the DS-TT and the UE).

In this embodiment, the time information corresponding to the time point $t2_{DS-TT[1]}$ under the 5GS clock domain (i.e., the above t3[2]) can be approximated as $t_{UE[1]} + b + \Delta t2$. $\Delta t2$ is timed by the clock domain of the DS-TT, but it is very small and thus the influence generated by frequency offset can be neglected. $\Delta t2$ represents a difference between $t2_{DS-TT[1]}$ and $t2_{DS-TT[2]}$.

Next, similar to the calculation of $t1_{NW-TT2UPF[1]}$, $t2_{DS-TT2UE[1]}$ (i.e., the above second time information) can also be calculated in this embodiment. In this embodiment, $t2_{DS-TT2UE[1]}$ can be expressed in the following formula (4):

$$t2_{DS\text{-}TT2UE[1]} = t_{UE[1]} + b + \Delta t2 - t2_{CyclePast} \qquad (4)$$

In the formula (4), $t2_{CyclePast}$ represents a difference between the time point $t2_{DS-TT[1]}$ and a start moment of the cycle represented by the C2_1.

In this embodiment, the DS-TT extracts $t1_{Nw-TT2UPF[1]}$ and C1_1 from the received first cycle synchronization information packet.

Next, the cycle C1_2 in which the NW-TT is currently located at the time point $t2_{DS-TT[1]}$ can be calculated based on the extracted $t1_{NW-TT2UPF[1]}$ and the above $t2_{DS-TT2UE[1]}$. For example, a time difference $t_{TT\_Delay[1]}$ between $t_{2DS-TT2UE[1]}$ and $t1_{NW-TT2UPF[1]}$ can be firstly calculated. Because the UE and the UPF have the unified clock domain, $t2_{DS-TT2UE[1]}$ and $t1_{NW-TT2UPF[1]}$ can be directly calculated. The calculated time differenced is approximate to the delay of transmission and processing in the 5GS. Next, based on the time difference $t_{TT\_Delay[1]}$ and the time length $t_{NW-TTCyleLen[1]}$ of the scheduling cycle of the NW-TT, the cycle number $C_{TT\_Delay[1]}$ of the scheduling cycles of the NW-TT corresponding to the time difference is calculated. $C_{TT\_Delay[1]}$ can be expressed in the following formula: $C_{TT\_Delay[1]} = \dfrac{t_{TT\_Delay[1]}}{t_{NW-TTCycleLen[1]}}$ .

In this embodiment, $t_{NW-TTCyleLen[1]}$ changes little and hence, the accumulated error resulting from the changes has little impact on the calculation. Therefore, $t_{NW-TTCyleLen[1]}$ can be equivalent to a constant value. Finally, based on the above cycle number $C_{TT\_Delay[1]}$ and the above C1_1, the cycle C1_2 in which the NW-TT is currently located at the time point $t2_{DS-TT[1]}$ is determined.

In this embodiment, C1_1 represents a scheduling cycle in which the NW-TT is currently located at $t1_{NW-TT[2]}$, and C1_2 represents a scheduling cycle in which the NW-TT is currently located at $t2_{DS-TT[1]}$. C1_2 can be expressed in the following formula (5):

$$C1\_2 = C1\_1 + C_{TT\_Delay[1]} \qquad (5)$$

Here, the following record is finally obtained: the scheduling cycle C2_1 in which the DS-TT is located currently at the time point $t2_{DS-TT[1]}$, and the scheduling cycle C1_2 in which the NW-TT is currently located at the time point $t2_{DS-TT[1]}$. For ease of descriptions, this record herein is denoted as an I-th record.

It is supposed that there is also a J-th record (obtained in similar way) before the I-th record. The J-th record includes the following contents: the scheduling cycle C2_0 in which the DS-TT is currently located upon receiving the second cycle synchronization information packet, and the scheduling cycle C1_0 in which the NW-TT is currently located when the DS-TT receives the second cycle synchronization information packet.

Based on this, the respective cycle increments $\triangle C_{DS-TT}$ (i.e., the above first increment) of the DS-TT and $\triangle C_{NEW-TT}$ (i.e., the above second increment) of the NW-TT are calculated.

$$\triangle C_{DS\text{-}TT} = C2\_1 - C2\_0;$$

$$\triangle C_{NW\text{-}TT} = C1\_2 - C1\_0.$$

It is determined whether a difference between $\triangle C_{DS-TT}$ and $\triangle C_{NW-TT}$ is within a preset value range; and if not, the scheduling cycle of the DS-TT is adjusted.

For example, if $\triangle C_{DS-TT}$ is greater than $\triangle C_{NW-TT}$, the time length of the scheduling cycle of the DS-TT is increased (the specific increase amount depends on the difference between $\triangle C_{DS-TT}$ and $\triangle C_{NW-TT}$); if $\triangle C_{DS-TT}$ is less than $\triangle C_{NW-TT}$, the time length of the scheduling cycle of the DS-TT is reduced (the specific reduction amount depends on the difference between $\triangle C_{DS-TT}$ and $\triangle C_{NW-TT}$).

Afterwards, the DS-TT can schedule a packet in the packet queue for forwarding, based on the adjusted scheduling cycle.

Here, the descriptions to the embodiments of the invention have been completed.

The above descriptions are made on the methods provided by the embodiments of the invention. The following descriptions are made on a system and an apparatus provided by the embodiments of the invention.

An embodiment provides a cycle synchronization system, which includes a first transmission node and a second transmission node. The first transmission node performs the blocks in the flow shown in FIG. 1 and the second transmission node performs the blocks in the flow shown in FIG. 2.

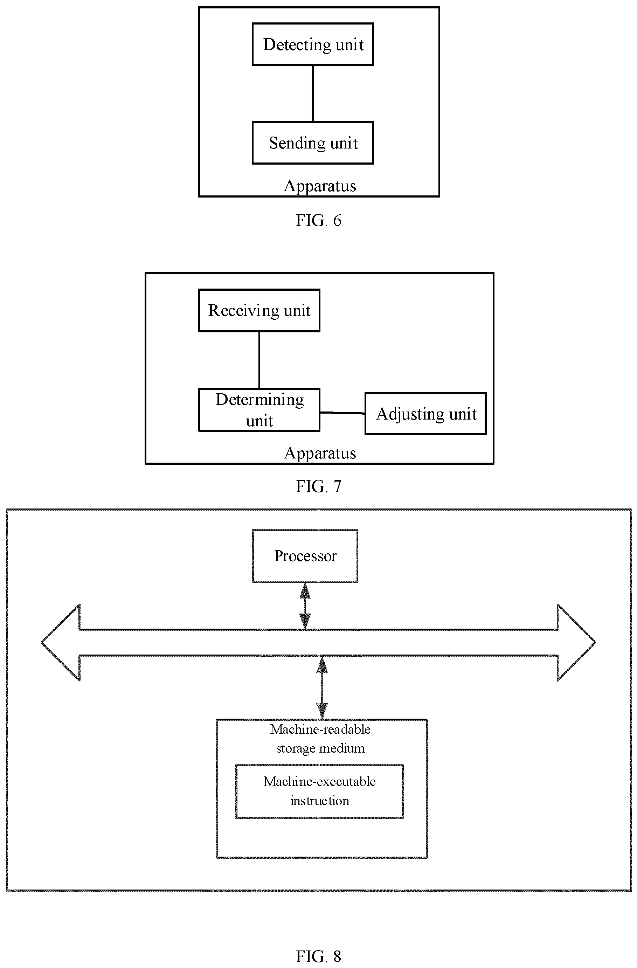

Correspondingly, an embodiment of the invention further provides an apparatus shown in FIG. 6. The apparatus is applied to a first transmission node. The apparatus corresponds to the flow as shown in FIG. 1.

As shown in FIG. 6, the apparatus includes:

a detecting unit, configured to detect a packet transmission event;

a sending unit, configured to, when the detecting unit detects the packet transmission event, send a first cycle synchronization information packet to a second transmission node at a time point t1[1] under a first clock domain, such that the second transmission node, upon determining that a width of a scheduling cycle for packet queue scheduling in the second transmission node needs to be adjusted based on the first cycle synchronization information packet, adjusts the width of the scheduling cycle, so as to enable an error between the adjusted width of the scheduling cycle and a width of a scheduling cycle for packet queue scheduling in the first transmission node to be within a preset synchronization range;

the first cycle synchronization information packet includes at least: a current cycle C1_1 of the first transmission node and first time information; where the current cycle is a scheduling cycle in which the first transmission node is currently located for packet queue scheduling, or the current cycle is a system cycle of the first transmission node; the first time information is a time point under a third clock domain, which is determined based on time information t3[1] under the third clock domain corresponding to the time point t1[1] in the first clock domain.

As an embodiment, t3[1] can be expressed in the following formula:

$$t3[1]=t3[0]+a+\Delta t1;$$

where t3_1[0] represents time information under the third clock domain obtained by the first transmission node at a time point t1[0] under the first clock domain, where the time point t1[0] is prior to the time point t1[1]; $a$ represents a transmission delay of time information between the first transmission node and a first intermediate device, and $\Delta t1$ represents a time difference between the time point t1[1] and the time point t1[0].

As an embodiment, the first time information is time information t3[1] under the third clock domain corresponding to the time point t1[1] in the first clock domain; or,

the first time information is a difference between t3[1] and $t1_{CyclePast}$, where $t1_{CyclePast}$ represents a difference between the time point t1[1] and a start moment of the current cycle.

As an embodiment, the packet transmission event includes at least arrival of packet transmission time or an externally-transmitted instruction.

As an embodiment, the network system is a 5G system (5GS);

the first transmission node is a Network-Side TSN Translator (NW-TT), the first intermediate device is a User Plane Function network element (UPF), the second transmission node is a Device-Side TSN Translator (DS-TT), and the second intermediate device is a terminal User Equipment (UE); or, the first transmission node is a DS-TT, the first intermediate device is a UE, the second transmission node is a NW-TT, and the second intermediate device is a UPF; or,

the first transmission node and the second transmission node are two different DS-TTs, and the first intermediate device and the second intermediate device are two different UEs.

Here, the structural descriptions on the apparatus shown in FIG. 6 are completed.

An embodiment of the invention further provides an apparatus shown in FIG. 7. The apparatus corresponds to the flow in FIG. 2. The apparatus is applied to a second transmission node. As shown in FIG. 7, the apparatus includes:

a receiving unit, configured to receive a first cycle synchronization information packet from a first transmission node at a time point t2[1] under a second clock domain and determine a current cycle C2_1 of the second transmission node; a determining unit, configured to, based on a cycle C1_1 and first time information included in the first cycle synchronization information packet, determine a cycle C1_2 in which the first transmission node is currently located at the time point t2[1];

an adjusting unit, configured to, based on the C2_1 and C1_2, and C2_0 and C1_0 both determined by the second transmission node upon receiving a second cycle synchronization information packet previously, determine whether to adjust a width of a scheduling cycle for packet queue scheduling in the second transmission node; if yes, adjust the width of the scheduling cycle for packet queue scheduling in the second transmission node to enable an error between the adjusted width of the scheduling cycle and a width of a scheduling cycle for packet queue scheduling in the first transmission node to be within a preset synchronization range, where C2_0 represents a current cycle in which the second transmission node receives the second cycle synchronization information packet, and C1_0 represents a cycle in which the first transmission node is located when the second transmission node receives the second cycle synchronization information packet.

As an embodiment, based on the cycle C1_1 and the first time information included in the first cycle synchronization information packet, determining, by the determining unit, the cycle C1_2 in which the first transmission node is currently located at the time point t2[1] includes:

calculating a time difference between second time information and the first time information; where the second time information is a time point under the third clock domain, which is determined based on time information t3[2] under the third clock domain corresponding to the time point t2[1] in the second clock domain;

based on the time difference and a time length of the scheduling cycle of the first transmission node, determining a cycle number of the scheduling cycles of the first transmission node corresponding to the time difference;

based on the cycle number and the C1_1, determining the cycle C1_2 in which the first transmission node is located at the time point t2[1].

As an embodiment, t3[2] is expressed in the following formula: $t3[2]= t3\_2[0] +b+\Delta t2$;

where t3_2[0] represents time information under the third clock domain obtained by the second transmission node at a time point t2[0] under the second clock domain, where the time point t2[0] is prior to the time point t2[1]; $b$ represents a transmission delay of time information between the second transmission node and a second intermediate device, and $\Delta t2$ represents a time difference between the time point t2[1] and the time point t2[0].

As an embodiment, the second time information is t3[2]; or,

the second time information is a difference between t3[2] and $t2_{CyclePast}$, where $t2_{CyclePast}$ is a difference between the time point t2[1] and a start moment of a cycle represented by C2_1.

As an embodiment, based on the C2_1 and C1_2, and C2_0 and C1_0 both determined by the second transmission node upon receiving the second cycle synchronization information packet previously, determining, by the adjusting unit, whether to adjust the width of the scheduling cycle for packet queue scheduling in the second transmission node includes:

calculating a first increment between C2_1 and C2_0;

calculating a second increment between C1_2 and C1_0;

determining whether a difference between the first increment and the second increment is within a preset value range;

if not, determining to adjust the width of the scheduling cycle of the second transmission node; if yes, determining not to adjust the width of the scheduling cycle of the second transmission node.

As an embodiment, the network system is a 5G system (5GS);

the first transmission node is a Network-Side TSN Translator (NW-TT), the first intermediate device is a User Plane Function network element (UPF), the second transmission node is a Device-Side TSN Translator (DS-TT), the second intermediate device is a terminal User Equipment (UE); or the first transmission node is a DS-TT, the first intermediate device is a UE, the second transmission node is a NW-TT, and the second intermediate device is a UPF; or,

the first transmission node and the second transmission node are two different DS-TTs, and the first intermediate device and the second intermediate device are two different UEs.

Here, the structural descriptions on the apparatus shown in FIG. 7 are completed.

FIG. 8 is a structural diagram illustrating an electronic device according to an embodiment of the invention. As shown in FIG. 8, the hardware structure can include: a processor and a machine-readable storage medium, where the machine-readable storage medium stores machine executable instructions executable by the processor; and the processor is configured to execute the machine executable instructions to perform the methods mentioned in the above embodiments of the invention.

Based on the same application idea as the above methods, an embodiment of the invention further provides a machine-readable storage medium storing several computer instructions, where the computer instructions are executed by a processor to perform the methods mentioned in the above embodiments of the invention.

Illustratively, the machine-readable storage medium mentioned herein may be any of electronic, magnetic, optical or other physical storage devices and may contain or store information such as executable instructions, data and so on. For example, the machine-readable storage medium may be a Random Access Memory (RAM), volatile or non-volatile memory, a flash memory, a storage drive (e.g. hard disk drive), a solid state harddisk, any type of storage disk (e.g., compact disk, Digital Video Disk (DVD)), or a similar storage medium, or a combination thereof.

The systems, apparatuses, modules or units described in the above embodiments may be specifically implemented by a computer chip or an entity or may be implemented by a product with a particular function. A typical implementing device may be a computer and the computer may be specifically a personal computer, a laptop computer, a cellular phone, a camera phone, a smart phone, a personal digital assistant, a media player, a navigation device, an email transceiver, a game console, a tablet computer, a wearable device, or a combination of any several devices of the above devices.

For convenience of description, the above apparatus is divided into different units based on functionality for descriptions. Of course, the functions of different units may be implemented in a same or a plurality of hardware and/or software when practicing the invention.

The persons skilled in the art should understand that the embodiments of the invention may be provided as a method, a system, or a computer program product. Thus, entire hardware embodiments, entire software embodiments or embodiments combining software and hardware may be adopted in the invention. Further, the invention may be implemented in the form of a computer program product that is operated on one or more computer available storage media (including but not limited to magnetic disk memory, CD-ROM, and optical memory and so on) including computer available program codes.

The invention is described by referring to flowcharts and/or block diagrams of a method, a device (a system) and a computer program product in the embodiments of the invention. It is understood that each flowchart and/or block in the flowcharts and/or the block diagrams or a combination of a flow chart and/or a block of the flowcharts and/or the block diagrams may be implemented by computer program instructions. These computer program instructions may be provided to a general-purpose computer, a dedicated computer, an embedded processor, or a processor of another programmable data processing device to generate a machine so that the instructions executable by a computer or a processor of another programmable data processing device generate an apparatus for implementing functions designated in one or more flows of the flowcharts and/or one or more blocks of the block diagrams.

Further, these computer program instructions may also be stored in a computer readable memory that can direct a computer or another programmable data processing device to work in a particular manner so that the instructions stored in the computer readable memory generate a product including an instruction apparatus and the instruction apparatus can implement functions designated in one or more flows of the flowcharts and/or one or more blocks of the block diagrams.

The computer program instructions may also be loaded on a computer or another programmable data processing device, so that a series of operation steps can be executed on the computer or another programmable device to generate processing achieved by the computer, and thus instructions executable on the computer or another programmable device are provided for operations for realizing functions designated in one or more flows of the flowcharts and/or one or more blocks of the block diagrams.

The above descriptions are only some embodiments of the invention, and are not used to limit the invention. For those skilled in the art, the invention may have various changes and modifications. Any modifications, equivalent replacements, improvements, etc. made in the spirit and principle of this invention shall fall within the scope of claims of the invention.

## Claims

1. A cycle synchronization method, applied to a first transmission node, wherein the first transmission node is coupled to a second transmission node, a first clock domain of the first transmission node is different from a second clock domain of the second transmission node, a network system between the first transmission node and the second transmission node is coupled to the first transmission node through a first intermediate device and is coupled to the second transmission node through a second intermediate device, the first intermediate device and the second intermediate device have a same third clock domain in the network system; the method comprises:

(101) in response to detecting a packet transmission event, (102) sending a first cycle synchronization information packet to the second transmission node at a time point t1[1] under the first clock domain, to make the second transmission node, upon determining that a width of a scheduling cycle for packet queue scheduling in the second transmission node needs to be adjusted based on the first cycle synchronization information packet, adjusts the width of the scheduling cycle, so as to enable an error between the adjusted width of the scheduling cycle and a width of a scheduling cycle for packet queue scheduling in the first transmission node to be within a preset synchronization range;

the first cycle synchronization information packet comprises at least: an identifier C1_1 of a current cycle of the first transmission node and first time information; wherein the current cycle is a scheduling cycle in which the first transmission node is currently located for packet queue scheduling, or the current cycle is a system cycle of the first transmission node, and the system cycle refers to a total number of scheduling cycles experienced by the first transmission node, the system cycle will be increased by a set value, for every one scheduling cycle experienced; the first time information is a time point under the third clock domain, which is determined based on time information t3[1] under the third clock domain corresponding to the time point t1[1] in the first clock domain.

2. The method of claim 1, wherein t3[1] is expressed in the following formula:

$$t3[1]= t3\_1[0]+a+\Delta t1;$$

wherein t3_1[0] represents time information under the third clock domain obtained by the first transmission node at a time point t1[0] under the first clock domain, wherein the time point t1[0] is prior to the time point t1[1]; a represents a transmission delay of time information between the first transmission node and the first intermediate device, and $\Delta t1$ represents a time difference between the time point t1[1] and the time point t1[0].

3. The method of claim 1, wherein the first time information is the time information t3[1] under the third clock domain corresponding to the time point t1[1] in the first clock domain; or,
the first time information is a difference between t3[1] and $t1_{CyclePast}$, wherein $t1_{CyclePast}$ represents a difference between the time point t1[1] and a start moment of the current cycle.

4. The method of claim 1, wherein the packet transmission event comprises at least: arrival of packet transmission time or an externally-transmitted instruction.

5. The method of claim 1, wherein the network system is a 5G system (5GS);

the first transmission node is a Network-Side TSN Translator, NW-TT, the first intermediate device is a User Plane Function network element, UPF, the second transmission node is a Device-Side TSN Translator, DS-TT, and the second intermediate device is a terminal User Equipment, UE; or, the first transmission node is a DS-TT, the first intermediate device is a UE, the second transmission node is a NW-TT, and the second intermediate device is a UPF; or,
the first transmission node and the second transmission node are two different DS-TTs, and the first intermediate device and the second intermediate device are two different UEs.

6. A cycle synchronization method, applied to a second transmission node, wherein the second transmission node is coupled to a first transmission node, a first clock domain of the first transmission node is different from a second clock domain of the second transmission node, a network system between the first transmission node and the second transmission node is coupled to the first transmission node through a first intermediate device, and is coupled to the second transmission node through a second intermediate device, and the first intermediate device and the second intermediate device have a same third clock domain in the network system; the method comprises:

(201) receiving a first cycle synchronization information packet from the first transmission node at a time point t2[1] under the second clock domain and determining an identifier C2_1 of a current cycle of the second transmission node, wherein the current cycle is a scheduling cycle in which the second transmission node is currently located for packet queue scheduling, or the current cycle is a system cycle of the second transmission node;
(202) based on a cycle C1_1 and first time information comprised in the first cycle synchronization information packet, determining a cycle C1_2 in which the first transmission node is currently located at the time point t2[1];
(203) based on the identifier C2_1 and the identifier C1_2, and an identifier C2_0 and an identifier C1_0 both determined by the second transmission node upon receiving a second cycle synchronization information packet previously, determining whether to adjust a width of a scheduling cycle for packet queue scheduling in the second transmission node; if yes, adjusting the width of the scheduling cycle for packet queue scheduling in the second transmission node to enable an error between the adjusted width of the scheduling cycle and a width of a scheduling cycle for packet queue scheduling in the first transmission node to be within a preset synchronization range, wherein the identifier C2_0 represents a current cycle in which the second transmission node receives the second cycle synchronization information packet, and the identifier C1_0 represents a cycle in which the first transmission node is located when the second transmission node receives the second cycle synchronization information packet.

7. The method of claim 6, wherein based on the identifier C1_1 of the cycle and the first time information comprised in the first cycle synchronization information packet, determining the identifier C1_2 of the cycle in which the first transmission node is currently located at the time point t2[1] comprises:

calculating a time difference between second time information and the first time information; wherein the second time information is a time point under the third clock domain, which is determined based on time information t3[2] under the third clock domain corresponding to the time point t2[1] in the second clock domain;
based on the time difference and a time length of the scheduling cycle of the first transmission node, determining a cycle number of the scheduling cycles of the first transmission node corresponding to the time difference;
based on the cycle number and the identifier C1_1, determining the identifier C1_2 of the cycle in which the first transmission node is located at the time point t2[1].

8. The method of claim 7, wherein,

t3[2] is expressed in the following formula: $t3[2] = t3\_2[0] + b + \Delta t2$;
wherein t3_2[0] represents time information under the third clock domain obtained by the second transmission node at a time point t2[0] under the second clock domain, wherein the time point t2[0] is prior to the time point t2[1]; $b$ represents a transmission delay of time information between the second transmission node and the second intermediate device, and $\Delta t2$ represents a time difference between the time point t2[1] and the time point t2[0].

9. The method of claim 7, wherein the second time information is t3[2]; or,
the second time information is a difference between t3[2] and $t2_{CyclePast}$, wherein $t2_{CyclePast}$ represents a difference between the time point t2[1] and a start moment of a cycle represented by the identifier C2_1.

10. The method of claim 6, wherein based on the identifier C2_1 and the identifier C1_2, and the identifier C2_0 and the identifier C1_0 both determined by the second transmission node upon receiving the second cycle synchronization information packet previously, determining whether to adjust the width of the scheduling cycle for packet queue scheduling in the second transmission node comprises:

calculating a first increment between the identifier C2_1 and the identifier C2_0;
calculating a second increment between the identifier C1_2 and the identifier C1_0;
determining whether a difference between the first increment and the second increment is within a preset value range; if not, determining to adjust the width of the scheduling cycle of the second transmission node; if yes, determining not to adjust the width of the scheduling cycle of the second transmission node.

11. The method of claim 6, wherein the network system is a 5G system (5GS);

the first transmission node is a Network-Side TSN Translator, NW-TT, the first intermediate device is a User Plane Function network element, UPF, the second transmission node is a Device-Side TSN Translator, DS-TT, and the second intermediate device is a terminal User Equipment, UE; or, the first transmission node is a DS-TT, the first intermediate device is a UE, the second transmission node is a NW-TT, and the second intermediate device is a UPF; or,
the first transmission node and the second transmission node are two different DS-TTs, and the first intermediate device and the second intermediate device are two different UEs.

12. A cycle synchronization system, comprising: a first transmission node and a second transmission node, wherein a first clock domain of the first transmission node is different from a second clock domain of the second transmission node, a network system between the first transmission node and the second transmission node is coupled to the first transmission node through a first intermediate device, and is coupled to the second transmission node through a second intermediate device, the first intermediate device and the second intermediate device have a same third clock domain in the network system;

the first transmission node performs the operations according to the method of any one of claims 1 to 5;
the second transmission node performs the operations according to the method of any one of claims 6 to 11.

13. A first transmission node comprising a cycle synchronization apparatus, wherein the first transmission node is coupled to a second transmission node, a first clock domain of the first transmission node is different from a second clock domain of the second transmission node, a network system between the first transmission node and the second transmission node is coupled to the first transmission node through a first intermediate device, and is coupled to the second transmission node through a second intermediate device, the first intermediate device and the second intermediate device have a same third clock domain in the network system; wherein the cycle synchronization apparatus is configured to perform the method of any one of claims 1 to 5.

14. An electronic device, comprising a processor and a machine-readable storage medium; wherein,

the machine-readable storage medium stores machine executable instructions executable by the processor;
the processor is configured to execute the machine executable instructions to perform the method of any one of claims 1 to 11.

15. A machine-readable storage medium, storing machine executable instructions executable by a processor; wherein, the machine executable instructions are executed by the processor to perform the method of any one of claims 1 to 11.

## Patentansprüche

1. Zyklussynchronisationsverfahren, das auf einen ersten Übertragungsknoten angewandt wird, wobei der erste Übertragungsknoten mit einem zweiten Übertragungsknoten gekoppelt ist, sich ein erster Taktbereich des ersten Übertragungsknotens von einem zweiten Taktbereich des zweiten Übertragungsknotens unterscheidet, ein Netzwerksystem zwischen dem ersten Übertragungsknoten und dem zweiten Übertragungsknoten über eine erste Zwischenvorrichtung mit dem ersten Übertragungsknoten gekoppelt ist und über eine zweite Zwischenvorrichtung mit dem zweiten Übertragungsknoten gekoppelt ist, wobei die erste Zwischenvorrichtung und die zweite Zwischenvorrichtung einen gleichen dritten Taktbereich im Netzwerksystem aufweisen; wobei das Verfahren umfasst:

(101) als Reaktion auf das Erfassen eines Paketübertragungsereignisses (102) Senden eines ersten Zyklussynchronisationsinformationspakets an den zweiten Übertragungsknoten zu einem Zeitpunkt t1[1] unter dem ersten Taktbereich, um den zweiten Übertragungsknoten dazu zu veranlassen, bei Bestimmen, dass eine Breite eines Planungszyklus für die Paketwarteschlangenplanung im zweiten Übertragungsknoten auf der Basis des ersten Zyklussynchronisationsinformationspakets anzupassen ist, die Breite des Planungszyklus anzupassen, um zu ermöglichen, dass ein Fehler zwischen der angepassten Breite des Planungszyklus und einer Breite eines Planungszyklus für die Paketwarteschlangenplanung im ersten Übertragungsknoten innerhalb eines vorgegebenen Synchronisationsbereichs liegt;
das erste Zyklussynchronisationsinformationspaket wenigstens umfasst: einen Identifizierer C1_1 eines aktuellen Zyklus des ersten Übertragungsknotens und eine erste Zeitinformation; wobei der aktuelle Zyklus ein Planungszyklus ist, in dem sich der erste Übertragungsknoten aktuell für die Paketwarteschlangenplanung befindet, oder der aktuelle Zyklus ein Systemzyklus des ersten Übertragungsknotens ist, und sich der Systemzyklus auf eine Gesamtzahl von Planungszyklen bezieht, welcher der erste Übertragungsknoten unterworfen ist, wobei der Systemzyklus für jeden unterworfenen Planungszyklus um einen festgelegten Wert erhöht wird; die erste Zeitinformation ein Zeitpunkt unter dem dritten Taktbereich ist, der auf der Basis der Zeitinformation t3[1] unter dem dritten Taktbereich entsprechend dem Zeitpunkt t1[1] im ersten Taktbereich bestimmt wird.

2. Verfahren nach Anspruch 1, wobei t3[1] in der folgenden Formel ausgedrückt wird:

$$t3[1]= t3\_1[0]+a+\Delta t1;$$

wobei t3_1[0] eine Zeitinformation unter dem dritten Taktbereich darstellt, die durch den ersten Übertragungsknoten zu einem Zeitpunkt t1[0] unter dem ersten Taktbereich erhalten wird, wobei der Zeitpunkt t1[0] vor dem Zeitpunkt t1[1] liegt; a eine Übertragungsverzögerung der Zeitinformation zwischen dem ersten Übertragungsknoten und der ersten Zwischenvorrichtung darstellt, und $\Delta t1$ eine Zeitdifferenz zwischen dem Zeitpunkt t1[1] und dem Zeitpunkt t1[0] darstellt.

3. Verfahren nach Anspruch 1, wobei die erste Zeitinformation die Zeitinformation t3[1] unter dem dritten Taktbereich ist, die dem Zeitpunkt t1[1] im ersten Taktbereich entspricht; oder, die erste Zeitinformation eine Differenz zwischen t3[1] und $t1_{CyclePast}$ ist, wobei $t1_{CyclePast}$ eine Differenz zwischen dem Zeitpunkt t1[1] und einem Startzeitpunkt des aktuellen Zyklus darstellt.

4. Verfahren nach Anspruch 1, wobei das Paketübertragungsereignis wenigstens umfasst: das Eintreffen der Paketübertragungszeit oder einer von außen übertragenen Anweisung.

5. Verfahren nach Anspruch 1, wobei das Netzwerksystem ein 5G-System (5GS) ist;

der erste Übertragungsknoten ein Network-Side TSN Translator (NW-TT) ist, die erste Zwischenvorrichtung ein User-Plane-Function-(UPF-)Netzwerkelement ist, der zweite Übertragungsknoten ein Device-Side TSN Translator (DS-TT) ist und die zweite Zwischenvorrichtung ein Endgerät-User-Equipment (UE) ist; oder der erste Übertragungsknoten ein DS-TT ist, die erste Zwischenvorrichtung ein UE ist, der zweite Übertragungsknoten ein NW-TT ist und die zweite Zwischenvorrichtung ein UPF ist; oder der erste Übertragungsknoten und der zweite Übertragungsknoten zwei verschiedene DS-TTs sind und die erste Zwischenvorrichtung und die zweite Zwischenvorrichtung zwei verschiedene UEs sind.

6. Zyklussynchronisationsverfahren, das auf einen zweiten Übertragungsknoten angewandt wird, wobei der zweite Übertragungsknoten mit einem erste Übertragungsknoten gekoppelt ist, sich ein erster Taktbereich des ersten Übertragungsknotens von einem zweiten Taktbereich des zweiten Übertragungsknotens unterscheidet, ein Netzwerksystem zwischen dem ersten Übertragungsknoten und dem zweiten Übertragungsknoten über eine erste Zwischenvorrichtung mit dem ersten Übertragungsknoten gekoppelt ist und über eine zweite Zwischenvorrichtung mit dem zweiten Übertragungsknoten gekoppelt ist, und die erste Zwischenvorrichtung und die zweite Zwischenvorrichtung einen gleichen dritten Taktbereich im Netzwerksystem aufweisen; wobei das Verfahren umfasst:

(201) Empfangen eines ersten Zyklussynchronisationsinformationspakets vom ersten Übertragungsknoten zu einem Zeitpunkt t2[1] unter dem zweiten Taktbereich und Bestimmen eines Identifizierers C2_1 eines aktuellen Zyklus des zweiten Übertragungsknotens, wobei der aktuelle Zyklus ein Planungszyklus ist, in dem sich der zweite Übertragungsknoten aktuell für die Paketwarteschlangenplanung befindet, oder der aktuelle Zyklus ein Systemzyklus des zweiten Übertragungsknotens ist;
(202) auf der Basis eines Zyklus C1_1 und einer ersten Zeitinformation, enthalten im ersten Zyklussynchronisationsinformationspaket, Bestimmen eines Zyklus C1_2, in dem sich der erste Übertragungsknoten aktuell zum Zeitpunkt t2[1] befindet;
(203) auf der Basis des Identifizierers C2_1 und des Identifizierers C1_2 sowie eines Identifizierers C2_0 und eines Identifizierers C1_0, die beide vom zweiten Übertragungsknoten beim vorhergehenden Empfangen eines zweiten Zyklussynchronisationsinformationspakets bestimmt werden, Bestimmen, ob eine Breite eines Planungszyklus für die Paketwarteschlangenplanung im zweiten Übertragungsknoten anzupassen ist; falls ja, Anpassen der Breite des Planungszyklus für die Paketwarteschlangenplanung im zweiten Übertragungsknoten, um zu ermöglichen, dass ein Fehler zwischen der angepassten Breite des Planungszyklus und einer Breite eines Planungszyklus für die Paketwarteschlangenplanung im ersten Übertragungsknoten innerhalb eines vorgegebenen Synchronisationsbereichs liegt, wobei der Identifizierer C2_0 einen aktuellen Zyklus darstellt, in dem der zweite Übertragungsknoten das zweite Zyklussynchronisationsinformationspaket empfängt, und der Identifizierer C1_0 einen Zyklus darstellt, in dem sich der erste Übertragungsknoten befindet, wenn der zweite Übertragungsknoten das zweite Zyklussynchronisationsinformationspaket empfängt.

7. Verfahren nach Anspruch 6, wobei auf der Basis des Identifizierers C1_1 des Zyklus und der im ersten Zyklussynchronisationsinformationspaket enthaltenen ersten Zeitinformation das Bestimmen des Identifizierers C1_2 des Zyklus, in dem sich der erste Übertragungsknoten zum Zeitpunkt t2[1] aktuell befindet, umfasst:

Berechnen einer Zeitdifferenz zwischen der zweiten Zeitinformation und der ersten Zeitinformation; wobei die zweite Zeitinformation ein Zeitpunkt unter dem dritten Taktbereich ist, der auf der Basis der Zeitinformation t3[2] unter dem dritten Taktbereich entsprechend dem Zeitpunkt t2[1] im zweiten Taktbereich bestimmt wird;

auf der Basis der Zeitdifferenz und einer Zeitlänge des Planungszyklus des ersten Übertragungsknotens Bestimmen einer Zykluszahl der Planungszyklen des ersten Übertragungsknotens entsprechend der Zeitdifferenz;

auf der Basis der Zykluszahl und des Identifizierers C1_1 Bestimmen des Identifizierers C1_2 des Zyklus, in dem sich der erste Übertragungsknoten zum Zeitpunkt t2[1] befindet.

8. Verfahren nach Anspruch 7, wobei

t3[2] in der folgenden Formel ausgedrückt wird: t3[2]= t3_2[0] +b+$\Delta$t2;
wobei t3_2[0] eine Zeitinformation unter dem dritten Taktbereich darstellt, die durch den zweiten Übertragungsknoten zu einem Zeitpunkt t2[0] unter dem zweiten Taktbereich erhalten wird, wobei der Zeitpunkt t2[0] vor dem Zeitpunkt t2[1] liegt; b eine Übertragungsverzögerung der Zeitinformation zwischen dem zweiten Übertragungsknoten und der zweiten Zwischenvorrichtung darstellt, und $\Delta$t2 eine Zeitdifferenz zwischen dem Zeitpunkt t2[1] und dem Zeitpunkt t2[0] darstellt.

9. Verfahren nach Anspruch 7, wobei die zweite Zeitinformation t3[2] ist; oder,
die zweite Zeitinformation eine Differenz zwischen t3[2] und $t2_{CyclePast}$ ist, wobei $t2_{CyclePast}$ eine Differenz zwischen dem Zeitpunkt t2[1] und einem Startzeitpunkt eines Zyklus darstellt, der durch den Identifizierer C2_1 dargestellt wird.

10. Verfahren nach Anspruch 6, wobei auf der Basis des Identifizierers C2_1 und des Identifizierers C1_2 sowie des Identifizierers C2_0 und des Identifizierers C1_0, die beide vom zweiten Übertragungsknoten beim vorhergehenden Empfangen des zweiten Zyklussynchronisationsinformationspakets bestimmt werden, das Bestimmen, ob die Breite des Planungszyklus für die Paketwarteschlangenplanung im zweiten Übertragungsknoten anzupassen ist, umfasst:

Berechnen eines ersten Inkrements zwischen dem Identifizierer C2_1 und dem Identifizierer C2_0;
Berechnen eines zweiten Inkrements zwischen dem Identifizierer C1_2 und dem Identifizierer C1_0;
Bestimmen, ob eine Differenz zwischen dem ersten Inkrement und dem zweiten Inkrement innerhalb eines vorgegebenen Wertebereichs liegt; falls nicht, Bestimmen, die Breite des Planungszyklus des zweiten Übertragungsknotens anzupassen; falls ja, Bestimmen, die Breite des Planungszyklus des zweiten Übertragungsknotens nicht anzupassen.

11. Verfahren nach Anspruch 6, wobei das Netzwerksystem ein 5G-System (5GS) ist;

der erste Übertragungsknoten ein Network-Side TSN Translator (NW-TT) ist, die erste Zwischenvorrichtung ein User-Plane-Function-(UPF-)Netzwerkelement ist, der zweite Übertragungsknoten ein Device-Side TSN Translator (DS-TT) ist und die zweite Zwischenvorrichtung ein Endgerät-User-Equipment (UE) ist; oder der erste Übertragungsknoten ein DS-TT ist, die erste Zwischenvorrichtung ein UE ist, der zweite Übertragungsknoten ein NW-TT ist und die zweite Zwischenvorrichtung ein UPF ist; oder
der erste Übertragungsknoten und der zweite Übertragungsknoten zwei verschiedene DS-TTs sind und die erste Zwischenvorrichtung und die zweite Zwischenvorrichtung zwei verschiedene UEs sind.

12. Zyklussynchronisationssystem, umfassend: einen ersten Übertragungsknoten und einen zweiten Übertragungsknoten, wobei sich ein erster Taktbereich des ersten Übertragungsknotens von einem zweiten Taktbereich des zweiten Übertragungsknotens unterscheidet, ein Netzwerksystem zwischen dem ersten Übertragungsknoten und dem zweiten Übertragungsknoten über eine erste Zwischenvorrichtung mit dem ersten Übertragungsknoten gekoppelt ist und über eine zweite Zwischenvorrichtung mit dem zweiten Übertragungsknoten gekoppelt ist, wobei die erste Zwischenvorrichtung und die zweite Zwischenvorrichtung einen gleichen dritten Taktbereich im Netzwerksystem aufweisen;

der erste Übertragungsknoten die Operationen gemäß dem Verfahren nach einem der Ansprüche 1 bis 5 ausführt;
der zweite Übertragungsknoten die Operationen gemäß dem Verfahren nach einem der Ansprüche 6 bis 11 ausführt.

13. Erster Übertragungsknoten, umfassend eine Zyklussynchronisationsvorrichtung, wobei der erste Übertragungsknoten mit einem zweiten Übertragungsknoten gekoppelt ist, sich ein erster Taktbereich des ersten Übertragungsknotens von einem zweiten Taktbereich des zweiten Übertragungsknotens unterscheidet, ein Netzwerksystem zwischen dem ersten Übertragungsknoten und dem zweiten Übertragungsknoten über eine erste Zwischenvorrichtung mit dem ersten Übertragungsknoten gekoppelt ist und über eine zweite Zwischenvorrichtung mit dem zweiten Übertragungsknoten gekoppelt ist, wobei die erste Zwischenvorrichtung und die zweite Zwischenvorrichtung einen gleichen dritten Taktbereich im Netzwerksystem aufweisen; wobei die Zyklussynchronisationsvorrichtung zum Ausführen des Verfahrens nach einem der Ansprüche 1 bis 5 ausgebildet ist.

14. Elektronische Vorrichtung, umfassend einen Prozessor und ein maschinenlesbares Speichermedium; wobei,

das maschinenlesbare Speichermedium maschinenausführbare Anweisungen speichert, die vom Prozessor ausführbar sind;
der Prozessor zum Ausführen der maschinenausführbaren Anweisungen zum Ausführen des Verfahrens nach einem der Ansprüche 1 bis 11 ausgebildet ist.

15. Maschinenlesbares Speichermedium zum Speichern von maschinenausführbaren Anweisungen, die von einem Prozessor ausführbar sind; wobei,
die maschinenausführbaren Anweisungen vom Prozessor ausgeführt werden, um das Verfahren nach einem der Ansprüche 1 bis 11 auszuführen.

**Revendications**

1. Procédé de synchronisation de cycle, appliqué à un premier nœud de transmission, dans lequel le premier nœud de transmission est couplé à un deuxième nœud de transmission, un premier domaine d'horloge du premier nœud de transmission est différent d'un deuxième domaine d'horloge du deuxième nœud de transmission, un système de réseau entre le premier nœud de transmission et le deuxième nœud de transmission est couplé au premier nœud de transmission par l'intermédiaire d'un premier dispositif intermédiaire et est couplé au deuxième nœud de transmission par l'intermédiaire d'un deuxième dispositif intermédiaire, le premier dispositif intermédiaire et le deuxième dispositif intermédiaire ont un même troisième domaine d'horloge dans le système de réseau ; le procédé comprend :

(101) en réponse à la détection d'un événement de transmission de paquets, (102) l'envoi d'un premier paquet d'informations de synchronisation de cycle au deuxième nœud de transmission à un point temporel t1[1] sous le premier domaine d'horloge, pour faire en sorte que le deuxième nœud de transmission, après avoir déterminé qu'une largeur d'un cycle d'ordonnancement de file d'attente de paquets dans le deuxième nœud de transmission doit être ajustée sur la base du premier paquet d'informations de synchronisation de cycle, ajuste la largeur du cycle d'ordonnancement de manière à ce que l'erreur entre la largeur ajustée du cycle d'ordonnancement et la largeur d'un cycle d'ordonnancement pour l'ordonnancement de la file d'attente de paquets dans le premier nœud de transmission se situe dans une plage de synchronisation prédéfinie ;
le premier paquet d'informations de synchronisation de cycle comprend au moins : un identifiant C1_1 d'un cycle actuel du premier nœud de transmission et de la première information temporelle ; dans lequel le cycle actuel est un cycle d'ordonnancement dans lequel le premier nœud de transmission est actuellement situé pour l'ordonnancement de la file d'attente de paquets, ou le cycle actuel est un cycle de système du premier nœud de transmission, et le cycle de système se réfère à un nombre total de cycles d'ordonnancement expérimentés par le premier nœud de transmission, le cycle de système sera augmenté d'une valeur définie, pour chaque cycle d'ordonnancement expérimenté ; la première information temporelle est un point temporel dans le troisième domaine d'horloge, qui est déterminé sur la base des informations temporelles t3[1] dans le troisième domaine d'horloge correspondant au point temporel t1[1] dans le premier domaine d'horloge.

2. Procédé selon la revendication 1, dans lequel t3[1] est exprimé dans la formule suivante :

$$t3[1] = t3\_1[0] + a + \Delta t1 ;$$

dans lequel t3_1[0] représente les informations temporelles dans le troisième domaine d'horloge obtenues par le premier nœud de transmission à un point temporel t1[0] dans le premier domaine d'horloge, dans lequel le point temporel t1[0] est antérieur au point temporel t1[1] ; a représente un délai de transmission des informations temporelles entre le premier nœud de transmission et le premier dispositif intermédiaire, et $\Delta t1$ représente une différence temporelle entre le point temporel t1[1] et le point temporel t1[0].

3. Procédé selon la revendication 1, dans lequel la première information temporelle est l'information temporelle t3[1] dans le troisième domaine d'horloge correspondant au point temporel t1[1] dans le premier domaine d'horloge ; ou, la première information temporelle est une différence entre t3[1] et $t1_{CyclePast}$, dans lequel $t1_{CyclePast}$ représente une différence entre le point temporel t1[1] et un moment de départ du cycle actuel.

4. Procédé selon la revendication 1, dans lequel l'événement de transmission de paquets comprend au moins : l'arrivée du temps de transmission de paquets ou une instruction transmise de l'extérieur.

5. Procédé selon la revendication 1, dans lequel le système de réseau est un système 5G (5GS) ;

le premier nœud de transmission est un traducteur TSN côté réseau, NW-TT, le premier dispositif intermédiaire est un élément de réseau de fonction de plan utilisateur, UPF, le deuxième nœud de transmission est un traducteur TSN côté dispositif, DS-TT, et le deuxième dispositif intermédiaire est un équipement terminal d'utilisateur, UE ; ou, le premier nœud de transmission est un DS-TT, le premier dispositif intermédiaire est un UE, le deuxième nœud de transmission est un NW-TT, et le deuxième dispositif intermédiaire est un UPF ; ou, le premier nœud de transmission et le deuxième nœud de transmission sont deux DS-TT différents, et le premier dispositif intermédiaire et le deuxième dispositif intermédiaire sont deux UE différents.

6. Procédé de synchronisation de cycle, appliqué à un deuxième nœud de transmission, dans lequel le deuxième nœud de transmission est couplé à un premier nœud de transmission, un premier domaine d'horloge du premier nœud de transmission est différent d'un deuxième domaine d'horloge du deuxième nœud de transmission, un système de réseau entre le premier nœud de transmission et le deuxième nœud de transmission est couplé au premier nœud de transmission par l'intermédiaire d'un premier dispositif intermédiaire, et est couplé au deuxième nœud de transmission par l'intermédiaire d'un deuxième dispositif intermédiaire, et le premier dispositif intermédiaire et le deuxième dispositif intermédiaire ont un même troisième domaine d'horloge dans le système de réseau ; le procédé comprend :

(201) recevoir un premier paquet d'informations de synchronisation de cycle du premier nœud de transmission à un point temporel t2[1] sous le deuxième domaine d'horloge et déterminer un identifiant C2_1 d'un cycle actuel du deuxième nœud de transmission, dans lequel le cycle actuel est un cycle d'ordonnancement dans lequel le deuxième nœud de transmission est actuellement situé pour l'ordonnancement de la file d'attente de paquets, ou le cycle actuel est un cycle de système du deuxième nœud de transmission ;
(202) sur la base d'un cycle C1_1 et de la première information temporelle comprise dans le premier paquet d'informations de synchronisation de cycle, déterminer un cycle C1_2 dans lequel le premier nœud de transmission est actuellement situé au point temporel t2[1] ;
(203) sur la base de l'identifiant C2_1 et de l'identifiant C1_2, et d'un identifiant C2_0 et d'un identifiant C1_0 tous deux déterminés par le deuxième nœud de transmission lors de la réception d'un deuxième paquet d'informations de synchronisation de cycle précédemment, déterminer s'il faut ajuster la largeur d'un cycle d'ordonnancement pour l'ordonnancement de la file d'attente de paquets dans le deuxième nœud de transmission ; dans l'affirmative, ajuster la largeur du cycle d'ordonnancement pour l'ordonnancement de la file d'attente de paquets dans le deuxième nœud de transmission pour permettre à une erreur entre la largeur ajustée du cycle d'ordonnancement et la largeur d'un cycle d'ordonnancement pour l'ordonnancement de la file d'attente de paquets dans le premier nœud de transmission de se situer dans une plage de synchronisation prédéfinie, dans lequel l'identifiant C2_0 représente un cycle actuel dans lequel le deuxième nœud de transmission reçoit le paquet d'informations de synchronisation du deuxième cycle, et l'identifiant C1_0 représente un cycle dans lequel le premier nœud de transmission se trouve lorsque le deuxième nœud de transmission reçoit le paquet d'informations de synchronisation du deuxième cycle.

7. Procédé selon la revendication 6, dans lequel, sur la base de l'identifiant C1_1 du cycle et de la première information temporelle comprise dans le premier paquet d'informations de synchronisation de cycle, la détermination de l'identifiant C1_2 du cycle dans lequel le premier nœud de transmission est actuellement situé au point temporel t2[1] comprend :

calculer une différence temporelle entre la deuxième information temporelle et la première information temporelle ; dans lequel la deuxième information temporelle est un point temporel sous le troisième domaine d'horloge, qui est déterminé sur la base des informations temporelles t3[2] sous le troisième domaine d'horloge correspondant au point temporel t2[1] dans le deuxième domaine d'horloge ;
sur la base de la différence temporelle et d'une longueur temporelle du cycle d'ordonnancement du premier nœud de transmission, déterminer un numéro de cycle des cycles d'ordonnancement du premier nœud de transmission correspondant à la différence temporelle ;

en fonction du numéro de cycle et de l'identifiant C1_1, déterminer l'identifiant C1_2 du cycle dans lequel le premier nœud de transmission se trouve au point temporel t2[1].

8.  Procédé selon la revendication 7, dans lequel, t3[2] est exprimé par la formule suivante :

$$t3[2] = t3\_2[0] + b + \Delta t2 \; ;$$

dans lequel t3_2[0] représente les informations temporelles dans le troisième domaine d'horloge obtenues par le deuxième nœud de transmission à un point temporel t2[0] dans le deuxième domaine d'horloge, dans lequel le point temporel t2[0] étant antérieur au point temporel t2[1] ; b représente un délai de transmission des informations temporelles entre le deuxième nœud de transmission et le deuxième dispositif intermédiaire, et $\Delta t2$ représente une différence temporelle entre le point temporel t2[1] et le point temporel t2[0].

9.  Procédé selon la revendication 7, dans lequel la deuxième information temporelle est t3[2] ; ou, la deuxième information temporelle est une différence entre t3[2] et $t2_{CyclePast}$, dans lequel $t2_{CyclePast}$ représente une différence entre le point temporel t2[1] et un moment de départ d'un cycle représenté par l'identifiant C2_1.

10. Procédé selon la revendication 6, dans lequel, sur la base de l'identifiant C2_1 et de l'identifiant C1_2, et de l'identifiant C2_0 et de l'identifiant C1_0 tous deux déterminés par le deuxième nœud de transmission lors de la réception du deuxième paquet d'informations de synchronisation de cycle précédemment, la détermination de l'ajustement de la largeur du cycle d'ordonnancement pour l'ordonnancement de la file d'attente de paquets dans le deuxième nœud de transmission comprend :

calculer un premier incrément entre l'identifiant C2_1 et l'identifiant C2_0 ;
calculer un deuxième incrément entre l'identifiant C1_2 et l'identifiant C1_0 ;
déterminer si une différence entre le premier incrément et le deuxième incrément se situe dans une plage de valeurs prédéfinie ; dans la négative, déterminer d'ajuster la largeur du cycle d'ordonnancement du deuxième nœud de transmission ; dans l'affirmative, déterminer de ne pas ajuster la largeur du cycle d'ordonnancement du deuxième nœud de transmission.

11. Procédé selon la revendication 6, dans lequel le système de réseau est un système 5G (5GS) ;

le premier nœud de transmission est un traducteur TSN côté réseau, NW-TT, le premier dispositif intermédiaire est un élément de réseau de fonction de plan utilisateur, UPF, le deuxième nœud de transmission est un traducteur TSN côté dispositif, DS-TT, et le deuxième dispositif intermédiaire est un équipement terminal d'utilisateur, UE ; ou, le premier nœud de transmission est un DS-TT, le premier dispositif intermédiaire est un UE, le deuxième nœud de transmission est un NW-TT, et le deuxième dispositif intermédiaire est un UPF ; ou, le premier nœud de transmission et le deuxième nœud de transmission sont deux DS-TT différents, et le premier dispositif intermédiaire et le deuxième dispositif intermédiaire sont deux UE différents.

12. Système de synchronisation de cycle, comprenant : un premier nœud de transmission et un deuxième nœud de transmission, dans lequel un premier domaine d'horloge du premier nœud de transmission est différent d'un deuxième domaine d'horloge du deuxième nœud de transmission, un système de réseau entre le premier nœud de transmission et le deuxième nœud de transmission est couplé au premier nœud de transmission par l'intermédiaire d'un premier dispositif intermédiaire, et est couplé au deuxième nœud de transmission par l'intermédiaire d'un deuxième dispositif intermédiaire, le premier dispositif intermédiaire et le deuxième dispositif intermédiaire ont un même troisième domaine d'horloge dans le système de réseau ;

le premier nœud de transmission effectue les opérations selon le procédé selon l'une quelconque des revendications 1 à 5 ;
le deuxième nœud de transmission effectue les opérations selon le procédé selon l'une quelconque des revendications 6 à 11.

13. Premier nœud de transmission comprenant un appareil de synchronisation de cycle, dans lequel le premier nœud de transmission est couplé à un deuxième nœud de transmission, un premier domaine d'horloge du premier nœud de transmission est différent d'un deuxième domaine d'horloge du deuxième nœud de transmission, un système de réseau entre le premier nœud de transmission et le deuxième nœud de transmission est couplé au premier nœud de transmission par l'intermédiaire d'un premier dispositif intermédiaire, et est couplé au deuxième nœud de transmission par l'intermédiaire d'un deuxième dispositif intermédiaire, le premier dispositif intermédiaire et le deuxième dispositif intermédiaire ont un même troisième domaine d'horloge dans le système de réseau ; dans lequel l'appareil de synchronisation de cycle est configuré pour exécuter le procédé selon l'une quelconque des revendications 1 à 5.

14. Dispositif électronique, comprenant un processeur et un support de stockage lisible par machine ; dans lequel,

le support de stockage lisible par machine stocke des instructions exécutables par le processeur ;
le processeur est configuré pour exécuter les instructions exécutables par une machine pour mettre en œuvre le procédé selon l'une quelconque des revendications 1 à 11.

15. Support de stockage lisible par machine, stockant des instructions exécutables par une machine et exécutables par un processeur ; dans lequel,
les instructions exécutables par une machine sont exécutées par le processeur pour exécuter le procédé selon l'une quelconque des revendications 1 à 11.

101

When a packet transmission event is detected, perform step 102

102

Send a constructed first cycle synchronization information packet to the second transmission node at a time point t1[1] under the first clock domain, such that the second transmission node, upon determining that a width of a scheduling cycle for packet queue scheduling in the second transmission node needs to be adjusted based on the first cycle synchronization information packet, adjusts the width of the scheduling cycle, so as to enable an error between the adjusted width of the scheduling cycle and a width of a scheduling cycle for packet queue scheduling in the first transmission node to be within a preset synchronization range

FIG. 1

201

Receive a first cycle synchronization information packet from the first transmission node at a time point t2[1] under the second clock domain and determine a current cycle of the second transmission node

202

Determine, based on a cycle C1_1 and first time information included in the first cycle synchronization information packet, a cycle in which the first transmission node is currently located at the time point t2[1]

203

Determine, based on the C2_1 and C1_2, and C2_0 and C1_0 both determined by the second transmission node upon receiving a second cycle synchronization information packet previously, whether to adjust a width of a scheduling cycle of the second transmission node; if yes, adjust the width of the scheduling cycle of the second transmission node to enable the an error between the adjusted width of the scheduling cycle and a width of a scheduling cycle for packet queue scheduling in the first transmission node to be within a preset synchronization range, where C2_0 represents a current cycle in which the second transmission node receives the second cycle synchronization information packet, and C1_0 represents a cycle in which the first transmission node is currently located when the second transmission node receives the second cycle synchronization information packet

FIG. 2

FIG. 3

FIG. 4

FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111698787 A
- CN 113556763 A
- CN 113747512 A